# EUROPEAN PATENT SPECIFICATION

(11) **EP 0 667 276 B1**
(45) Date of publication and mention of the grant of the patent: **07.10.1998**
(21) Application number: 95850016.7
(22) Date of filing: 19.01.1995
(51) Int. Cl.: B62B 3/06, B66F 9/075, B66F 9/10

(54) **Lifting truck**
Gabelhubwagen
Chariot élévateur

(30) Priority: 21.01.1994 SE 9400188
(43) Date of publication of application: 16.08.1995
(73) Proprietor: BT Industries Aktiebolag, 595 81 Mjölby (SE)
(72) Inventor: Fransson, Anders, S-595 54 Mjölby (SE)
(74) Representative: Berglund, Erik Wilhelm

(56) References cited:
- EP-A- 0 553 067
- DE-A- 1 906 079
- FR-A- 2 690 123
- GB-A- 890 134
- GB-A- 1 558 347

## Description

This invention concerns a lifting truck for the handling of goods including a chassis with two from an engine unit protruding parallel support legs and carried on the support legs a lifting mast with an elevateable and lowerable lifting fork, the lifting mast being movable along the support legs between a first retracted position close to said engine unit and a second extended position close to the outer ends of the support legs and said chassis being supported by support wheels arranged under each support leg and a driving and steering wheel arranged under the engine unit.

Trucks of the above type (see EP-A-0 553 067) are often called moveable mast trucks, since the mast or the frame is movable along the support legs. In the retracted position these trucks function as ordinary support leg trucks, the stability being achieved by the wheel provided support legs. In the extended position of the lifting mast the load lifted by the lifting fork will be located in front of the supporting legs seen in the direction of the fork, why the truck in this position can be said to function as a counterweight truck with the load giving a lifting force in the engine end of the truck. To achieve the wanted load capacity and ability to manoeuver in the last mentioned position the driving and steering wheel must be subjected to a certain load. This in order to secure the necessary traction for the movements of the truck. In the retracted position no such overweight or counterweight is needed, and instead the existence of a large unnecessary overweight or counterweight reduce the driveability of the truck and it becomes heavy to steer. This may sometimes even reduce the lifting capacity, since the load on the driving and steering wheel and its driving device must be restricted. In particularly for smaller and lighter moveable mast trucks for instance of the kind that is shown in EP-A-553067, the difference in the load on the driving and steering wheel will be most considerable in the two positions of the mast, which among other things will make the truck heavy to steer and difficult to manoeuvre when the mast is retracted.

The object of the invention is therefor to achieve a lifting truck of the moveable mast type that does not have, or at least has very reduced problems due to high steering and driving wheel pressure and that in all positions of the mast is comfortable and safe to use. These objects must also be achievable in a reasonable simple manner in order not to increase fabrication costs too much.

The basis of the invention is the realization that instead of dimensioning the permitted load, the length of the truck and the weight of the engine end of the truck so that it despite the variations in pressure on the driving wheel still will have acceptable properties, the driving and steering wheel may be relieved from a part of the weight when the mast is moved to the innermost position. According to the invention this relief is provided by one or several additional supporting wheels being arranged under the engine unit (normally also containing a battery) and that control means are arranged to increase the pressure from the additional wheels against the ground when the lift mast moves towards the retracted position. Preferably the additional support wheels are suspended in the chassis via spring means that can be given different degree of pretension dependent on the position of the mast along the support legs, the control means applying the highest spring force against the ground with mast in its inner position.

From for example EP 0562 483 A1 it is known to arrange supporting additional wheels in the same end as the driving and steering wheel that by springs are urged towards the ground. The purpose for these additional supporting caster wheels is however to secure stability by preventing lateral tilting. None of these trucks have a moveable mast and there are no control means reducing the pretension when the mast is extended or increasing the tensioning spring force as the lifting mast is retracted.

Other objects and advantages of the invention are apparent from the following description. They are achieved by the characteristics listed in the subsequent patent claims.

The invention is now to be described in more detail with reference to the enclosed drawings on which:

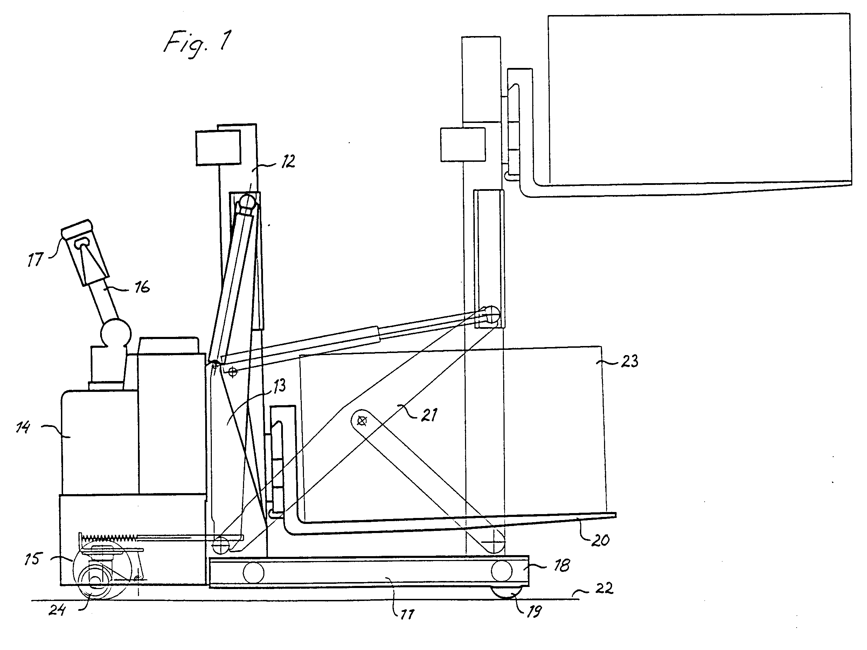

Fig. 1 is a lateral view of a lifting truck according to the invention with the lifting mast shown in the retracted position with broad lines and in extended position with fine lines.
Fig 2 is a lateral view of a part of the lifting truck and shows the driving and steering wheel and the additional support wheels.
Fig. 3 is a perspective view of the additional support wheels.

The shown truck with movable mast can be described as a traditional lead truck that has been provided with a lifting mast 11 movable along the support legs 12. The support legs are welded to a upright frame part 13, that in turn is mounted together with an engine and battery unit 14, containing as usual a not shown driving engine and a likewise not shown battery package. The driving engine is in some suitable way coupled to a driving and steering wheel 15, taking care of the driving and steering of the truck. The wheel 15 is normally entirely unsprung fastened in the chassis but varieties with different degree of springing are possible. The wheel is pivotable for the steering of the truck by means of a leading or manoeuvre arm 16, the outer end of which has been provided with a handle 17 for manual steering when a driver going on the side of the truck drives or leads this in the intended direction. In the outer end 18 of each support leg 11 supporting wheels 19 are arranged, why the truck normally can be said to be three wheeled.

The lifting mast 12 includes in the usual manner a lifting fork 20, that is movable along the mast by means of some not shown hydraulic lifting device. The lifting mast is movable along the support legs 11 from the first inner position shown in full lines to the second extended position shown in finer lines. The movement is achieved by means of a link mechanism 21, that also holds the mast in a stable vertical position. In the last mentioned outer position the fork 20 can be lowered to the floor level 22 of the truck to enable the lifting of goods not carried on a pallet. At this the center of gravity for the truck is displaced forwards in the direction of the fork and the load on the driving and steering wheel 15 is reduced. The weight of the chassis of the truck must at this constitute a sufficient counterweight to the lifted load 23 so that the truck does not risk to tilt forward. All longer transports take place with the mast in the inner retracted first position, the weight being displaced rearward towards the engine and battery unit 14 and the load on the driving and steering wheel increases. This wheel is more sensitive to high loads than pure supporting wheels, since the wheel must be pivotable for the steering of the truck and furthermore often a part of the load is transferred directly into a gearbox between driving engine and wheel hub. In order to reduce the load on the driving and steering wheel trucks in accordance with the invention are provided with additional support wheels 24 that shall take a part of the load that otherwise would be transferred to the first mentioned wheel.

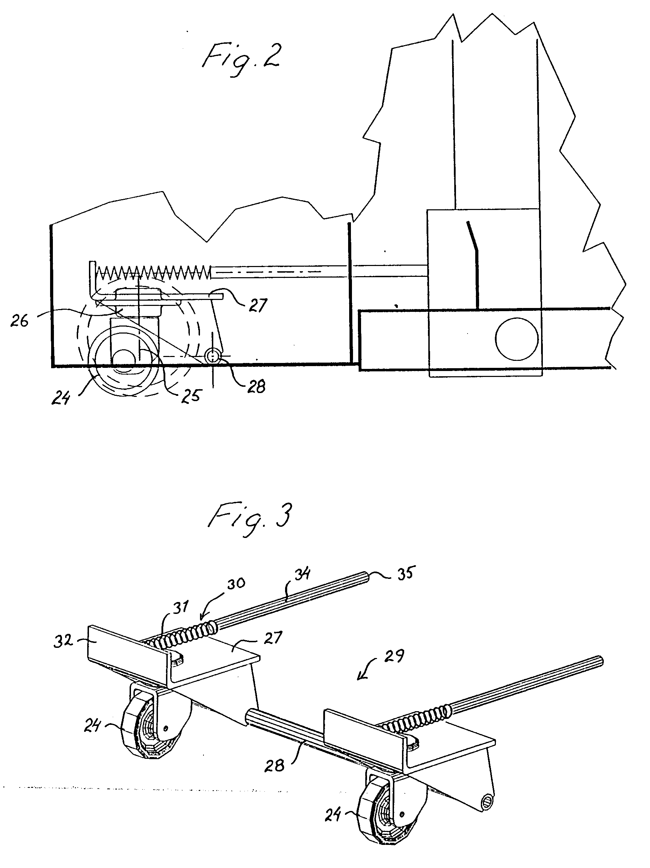

In the example shown the additional supporting wheels 24 are arranged as sprung castor wheels on each side of the driving and steering wheel 15. Each one of the supporting wheels 24 is pivotable around a vertical axle 25 and is via a bearing unit 26 mounted on a support plate 27. The support plates 27 are in turn mounted on a common pendulum axle 28, pivotably mounted in the chassis of the truck. The supporting wheel unit 24, 27, 28 according to fig 3 is thus pivotable in its entirety around the center of the pendulum axle 28. The supporting wheel unit with the common reference numeral 29 is also provided with a spring means 30 in the shape of two helical springs 31, which are arranged to force the supporting wheels 24 against the ground under the truck. The helical springs are therefor arranged between an upbent angle part 32 of the support plate 27 and a movable stop in the shape of a bar 34 movable in the length direction. Each bar 34 extends from the engine and battery unit 14 towards the support legs 11 so far that its free outer end 35 will rest against a stop, not shown, on the lifting mast and follow this during the later part of its movement from its second outer position to its inner position. At this movement the bar 34 is in its length direction forced against the spring 31, this is compressed and increases the spring pressure on the supporting wheels 24. The bars 34 thus constitute a simple control means controlling the pressure of the support wheels 24 against the ground. Other mechanical link systems may also be useful for the control of the spring force as well as different hydraulic and electrical systems. Since the two supporting wheels 24 are coupled in parallel via the pendulum axle 28 it is achieved that the lateral stability is improved, since both springs must be compressed at a certain vertical displacement of a separate supporting wheel . Without this coupling in parallel only one of the springs 31 would be able to counteract the lateral tilting. By choosing of springs and control means for the pretension of the springs the desired characteristics for the support is achieved. The support can thus be successive over the entire movement area of the mast from the first to the second position or alternatively close to the end of the movement at the retracted position. In order to achieve a comfortable required manual steering force on maneuvering of the steering arm 16 it has proved to be suitable to reduce the load on the driving and steering wheel with 30 to 50% depending on the length of the arm , choice of wheels etc. Instead of the shown helical springs of course many other types of spring means can be used , for instance pneumohydraulical springs that also can be coupled to the lifting hydraulics of the truck and possibly be made dependent of the weight of the lifted load. Many additional variations are of course possible within the scope of the following patent claims.

Since normally the truck is only moved on the ground with the lifting mast fully extended or retracted the above embodiment is fully sufficient even if the load relief is only provided in the innermost position. This also means that the actuation bars can be rather short, but still the force in the movement of the mast will be sufficient to tension the springs.In fact it may even be an advantage that the leading of the truck will only be comfortable when the mast has been fully retracted, making the intermediate positions unused at transportation. If so desired the change in the urging of the additional support casters against the ground may be continuous over the mast movement, or it can in some other way constitute a function of the mast movement. It is not necessary that the switch or alteration in spring pressure follow the same curve on extension or retraction of the mast. For instance the increase in spring pressure may be effected during the last 10 centimeters of travel for the mast as it moves towards its fully retracted position and in the other direction the pressure decrease may not take place until half of the mast travel.

The additional supporting wheels may in order also to serve as stabilizers be provided with stops for the vertical movement of the wheels, so that independent of the traction control by the mast they also prevent lateral tilting of the truck. Also these stop means may be controlled in their position as a function of the mast movement.

## Claims

1. Lifting truck for the handling of goods including a chassis with two from an engine unit (14) extending parallel support legs (11) and carried on the support legs a lifting mast with an elevateable and lowerable lifting fork (20), the lifting mast being displaceable along the support legs between a first retracted position close to said engine unit and a second extended position close to the outer ends (18) of the support legs and the chassis being supported by support wheels (19) arranged under each support leg and a driving and steering wheel (15) arranged under the engine unit, **characterized in** that one or several additional supporting wheels (24) are arranged under the engine unit (14) and that control means (34) are arranged to increase the pressure of the additional support wheels against the ground (22) when the mast is moved towards the first retracted position or is in this position and that this pressure is decreased when the mast moves away from this position or reach a given position away from the fully retracted position.

2. Lifting truck according to claim 1, **characterized in that** the additional supporting wheels (24) are movable vertically against the action of a spring means (30) and that the control means (34) is arranged to increase the spring force directed against the ground (22) exerted by the spring means when the mast is moved towards the first position.

3. Lifting truck according to claim 3, **characterized in** that the force directed against the ground is negligible when the mast is located in the second extended position.

4. Lifting truck according to any of the previous claims, **characterized** in that the control means (34) is arranged to relieve the driving and steering wheel (15) from load so that the additional supporting wheels become subjected to 30-50% of the load on the driving and steering wheel in the first position of the mast.

5. Lifting truck according to any of the previous claims, **characterized in** that an additional supporting wheel (24) is arranged on each side of the driving and steering wheel (15).

6. Lifting truck according to any of the previous claims, **characterized in** that the control means (34) includes a mechanical link system, that is movable lengthwise by the movement of the mast, the springs (31) in the spring means being pretensioned by contact with some unit in the link system.

7. Lifting truck according to any of the previous claims, **characterized in** that the link system includes a movable bar (34) arranged between the spring means (31) and the mast (12).

8. Lifting truck according to any of the previous claims, **characterized in** that each one of the additional supporting wheels (24) is suspended in a pendulum axle (28) arranged horizontally in the chassis.

9. Lifting truck according to any of the previous claims, **characterized in** that the supporting wheels (24) are suspended on a common pendulum axle (28), that is arranged to connect the support wheels torsionally stiff so that they are moved in parallel vertically.

10. Lifting truck according to any of the previous claims, **characterized in** that the lifting truck is a lead truck intended for indoor material handling and provided with a lead arm (16) for manual steering and other maneuvering of the truck.

## Patentansprüche

1. Hubwagen für die Warenhandhabung mit einem Fahrgestell mit zwei von einer Antriebseinheit (14) ausgehenden, parallel verlaufenden Schenkein (11) und mit einem von den Tragschenkeln getragenen Hubmast mit einer heb- und senkbaren Hubgabel (20), wobei der Hubmast entlang den Tragschenkeln zwischen einer ersten eingefahrenen Position in der Nähe der Antriebseinheit und einer zweiten ausgefahrenen Position in der Nähe der äußeren Enden (18) der Tragschenkel bewegbar ist und das Fahrgestell mittels Stützrädern (19), die unter jedem Tragschenkel angeordnet sind, und einem treibenden und lenkbaren Rad (15) abgestützt ist, welches unter der Antriebseinheit angeordnet ist, **dadurch gekennzeichnet**, daß ein oder mehrere zusätzliche Stützräder (24) unter der Antriebseinheit (14) angeordnet ist bzw. sind, und daß eine Steuereinrichtung (34) derart ausgelegt ist, daß der Anpreßdruck der zusätzlichen Stützräder gegen den Untergrund (22) vergrößert wird, wenn sich der Mast in Richtung zu der ersten, eingefahrenen Position bewegt oder sich in dieser Position befindet, und daß dieser Anpreßdruck vermindert wird, wenn der Mast sich von dieser Position weg bewegt oder eine vorgegebene Position entfernt von der vollständig eingefahrenen Position erreicht.

2. Hubwagen nach Anspruch 1, **dadurch gekennzeichnet**, daß die zusätzlichen Stützräder (24) entgegen der Wirkung einer Federeinwirkung (30) vertikal bewegbar sind, und daß die Steuereinrichtung (34) derart ausgelegt ist, daß die gegen den Untergrund (22) gerichtete und von der Federeinrichtung aufgebrachte Federkraft vergrößert wird, wenn sich der Mast in Richtung der ersten Position bewegt.

3. Hubwagen nach Anspruch 2, **dadurch gekennzeichnet**, daß die gegen den Untergrund gerichtete Kraft vernachlässigbar ist, wenn sich der Mast in der zweiten, ausgefahrenen Position befindet.

4. Hubwagen nach einem der vorangehenden Ansprüche, **dadurch gekennzeichnet**, daß die Steuereinrichtung (34) derart ausgelegt ist, daß das treibende und lenkbare Rad (15) von dem Ladegewicht entlastet wird, so daß die zusätzlichen Stützräder 30 bis 50 % der Belastung auf das treibende und lenkbare Rad in der ersten Position des Mastes aufnimmt.

5. Hubwagen nach einem der vorangehenden Ansprüche, **dadurch gekennzeichnet**, daß ein zusätzliches Stützrad (24) auf jeder Seite des treibenden und lenkbaren Rades (15) angeordnet ist.

6. Hubwagen nach einem der vorangehenden Ansprüche, **dadurch gekennzeichnet**, daß die Steuereinrichtung (34) eine mechanische Verbindungsanordnung umfaßt, welche in Längsrichtung durch die Bewegung des Mastes bewegbar ist, wobei die Federn (31) in der Federeinrichtung durch den Kontakt mit einer Einheit der Verbindungsanordnung vorgespannt sind.

7. Hubwagen nach einem der vorangehenden Ansprüche, **dadurch gekennzeichnet**, daß die Verbindungsanordnung ein bewegliches Glied (34) umfaßt, welches zwischen der Federeinrichtung (31) und dem Masten (12) angeordnet ist.

8. Hubwagen nach einem der vorangehenden Ansprüche, **dadurch gekennzeichnet**, daß jedes der zusätzlichen Stützräder (24) hängend an einer Pendelachse (28) angeordnet ist, welche im Fahrgestell horizontal angeordnet ist.

9. Hubwagen nach einem der vorangehenden Ansprüche, **dadurch gekennzeichnet**, daß die Stützräder (24) an einer gemeinsamen Achse (28) hängend gelagert sind, welche derart ausgelegt ist, daß sie die Stützräder torsionssteif derart verbindet, daß sie in vertikaler Richtung parallel bewegbar sind.

10. Hubwagen nach einem der vorangehenden Ansprüche, **dadurch gekennzeichnet**, daß der Hubwagen ein geführter Hubwagen für die Materialhandhabung in Gebäuden ist und mit einem Führungsarm (16) zur manuellen Lenkung und zur Manövrierung des Hubwagens versehen ist.

## Revendications

1. Chariot élévateur pour la manipulation de produits, comprenant un châssis comportant deux pattes de support (11) parallèles, s'étendant depuis une unité de moteur (14), et un mat de levage monté sur les pattes de support, ayant une fourche d'élévation (20) levable et abaissable, le mât de levage étant déplaçable le long des pattes de support entre une première position rétractée, proche de ladite unité de moteur, et une deuxième position déployée, proche des extrémités extérieures (18) des pattes de support et le châssis étant supporté par des roues de support (19) agencées au-dessous de chaque patte de support et une roue d'entraînement et de direction (15) agencée au-dessus de l'unité de moteur, caractérisé en ce qu'une ou plusieurs roues de support (24) supplémentaires sont disposées au-dessous de l'unité de moteur (14), et en ce que des moyens de commande (34) sont agencés afin d'augmenter la pression des roues de support supplémentaires contre le sol (22), lorsque le mât est déplacé vers la première position rétractée ou se trouve dans cette position, et en ce que cette pression est réduite lorsque le mât s'éloigne de cette position ou atteint une position donnée éloignée de la position complètement rétractée.

2. Chariot élévateur selon la revendication 1, caractérisé en ce que les roues de support (24) supplémentaires sont déplaçables verticalement contre l'action d'un moyen élastique (30) et en ce que le moyen de commande (34) est agencé de façon à augmenter la force élastique orientée sur le sol (22), exercée par le moyen élastique, lorsque le mât est déplacé vers la première position.

3. Chariot élévateur selon la revendication 3, caractérisé en ce que la force orientée sur le sol est négligeable lorsque le mât est placé dans la deuxième position déployée.

4. Chariot élévateur selon l'une quelconque des revendications précédentes, caractérisé en ce que le moyen de commande (34) est agencé de façon à libérer d'une charge la roue d'entraînement et de direction (15), de manière que les roues de support supplémentaires soient exposées à 30 à 50 % de la charge exercée sur la roue d'entraînement et de direction, dans la première position du mât.

5. Chariot élévateur selon l'une quelconque des revendications précédentes, caractérisé en ce qu'une roue de support (24) supplémentaire est disposée de chaque côté de la roue d'entraînement et de direction (15).

6. Chariot élévateur selon l'une quelconque des revendications précédentes, caractérisé en ce que le moyen de commande (34) comprend un système d'articulation mécanique, qui est déplaçable dans le sens de la longueur par le déplacement du mât, les ressorts (31) se trouvant dans le moyen élastique étant soumis à une pré-tension au contact d'une certaine unité dans le système d'articulation.

7. Chariot élévateur selon l'une quelconque des revendications précédentes, caractérisé en ce que le système d'articulation comprend une barre déplaçable (34) disposée entre le moyen élastique (31) et le mât (12).

8. Chariot élévateur selon l'une quelconque des revendications précédentes, caractérisé en ce que chacune des roues de support (24) supplémentaires est suspendue à un essieu pendulaire (28) disposé horizontalement dans le châssis.

9. Chariot élévateur selon l'une quelconque des revendications précédentes, caractérisé en ce que les roues de support (24) sont suspendues à un essieu pendulaire (28) commun, qui est agencé de façon à relier les roues de support de manière rigide en torsion, de façon qu'elles soient déplacées verticalement en parallèle.

10. Chariot élévateur selon l'une quelconque des revendications précédentes, caractérisé en ce que le chariot élévateur est un chariot à travail par l'avant destiné à une manipulation de matériau en local abrîté et pourvu d'un bras avant (16), destiné à un guidage manuel et à une autre manoeuvre du chariot.
